# EUROPÄISCHE PATENTSCHRIFT

(11) **EP 1 166 382 B1**
(45) Veröffentlichungstag und Bekanntmachung des Hinweises auf die Patenterteilung: **29.10.2003**
(21) Anmeldenummer: 00914108.6
(22) Anmeldetag: 04.03.2000
(51) Int. Cl.: H01M 8/10, H01M 8/12, H01M 8/24

(54) **HERSTELLUNG VON TUBULÄREN BRENNSTOFFZELLEN, BRENNSTOFFZELLENMODULEN, GRUNDELEMENTEN UND IONENTAUSCHERMEMBRANEN**
PRODUCTION OF TUBULAR FUEL CELLS, FUEL CELL MODULES, BASE ELEMENTS AND ION EXCHANGER MEMBRANES
PRODUCTION DE PILES A COMBUSTIBLE TUBULAIRES, MODULES DE PILES A COMBUSTIBLE, ELEMENTS DE BASE ET MEMBRANES D'ECHANGE D'IONS

(30) Priorität: 06.03.1999 DE 19909930
(43) Veröffentlichungstag der Anmeldung: 02.01.2002
(73) Patentinhaber: Fraunhofer-Gesellschaft zur Förderung der angewandten Forschung e.V., 80636 München (DE)
(72) Erfinder: HÖFLER, Thomas, D-70563 Stuttgart (DE); STROH, Norbert, D-71106 Magstadt (DE)
(86) Internationale Anmeldenummer: EP0001916
(87) Internationale Veröffentlichungsnummer: WO00054358

(56) Entgegenhaltungen:
- EP-A- 0 442 742
- WO-A-97/47052
- WO-A-98/16963
- WO-A-99/34464
- DE-A- 19 526 609
- DE-C- 19 539 257
- US-A- 5 458 989

## Beschreibung

Die vorliegende Erfindung betrifft einen tubulären Verbund aus einem Elektronen-leitenden und einem Ionen-leitenden Material zur Herstellung von tubulären Brennstoffzellenelementen, Brennstoffzellenmodulen und Ionentauschermembranen sowie Verfahren zu deren Herstellung.

Brennstoffzellen sind dadurch charakterisiert, dass sie unter Einsatz von im allgemeinen auch katalytisch wirkenden Elektroden chemische Energie von Brennstoffen wie Wasserstoff, Methan in Form von Erdgas und Biogas, Kohlenwasserstoffe oder Methanol direkt und effizient in elektrische Energie umwandeln können. Bei dieser Umwandlung werden keine Schadstoffe freigesetzt und, da keine mechanischen Bauteile vorhanden sind, weisen Brennstoffzellen eine geräuschlose, verschleiß- und wartungsarme Betriebsweise auf. Brennstoffzellen können in Kraftwerken, dezentralen Blockheizkraftwerken und in mobilen Anwendungen wie in Fahrzeugen zum Einsatz kommen. Brennstoffzellen werden je nach Art der Energieumsetzung in unterschiedliche Typen eingeteilt. Eine dieser Typen ist die PEM-Brennstoffzelle (Proton Exchange Membran), auch als Membran-Brennstoffzelle bekannt. Die bekannten PEM-Brennstoffzellen weisen jeweils in Einheit mit einer Anode und einer Kathode eine Vielzahl von parallel zueinander angeordneten plattenförmigen Membranen und Elektroden auf. Die zum Betrieb dieser Brennstoffzelle notwendige Zufuhr von Sauerstoff und Wasserstoff beziehungsweise anderen Brenngasen erfolgt getrennt voneinander alternierend in die jeweils durch die Membranen voneinander abgetrennten Kompartimente einer solchen Zelle. Derartige Zellen weisen also unter anderem den Nachteil auf, dass die Zufuhr der Energieträger apparativ aufwendig ist. Weitere Nachteile dieser Zellen sind daran zu sehen, dass nur eine niedrige Packungsdichte erreicht werden kann und, bedingt durch Konzentrationsgradienten über der Anströmfläche, die Effizienz der Betriebsweise zu wünschen übrig lässt.

Aus der WO 97/47052 und der US 5,458,989 sind zylindrische PEM-Brennstoffzellen bekannt. Aufgrund der Struktur und Herstellungsweise dieser Brennstoffzellen sind jedoch ihrer Dimensionierung Grenzen gesetzt. Zudem weist deren Herstellung Nachteile insofern auf, als dass die für den Einbau und die Anordnung der Elektroden eingesetzten Wickeltechniken aufwendig sind. Aufgrund dieser Wickeltechniken ist eine Längenbegrenzung der Brennstoffzelle durch die für die Aufwicklung benötigten Kerne vorgegeben. Die Herstellung kann zudem nur diskontinuierlich erfolgen.

Elektrochemische Verfahren setzen in vielen Fällen Ionentauschermembranen ein. Ionenaustauschermembranen werden beispielsweise zur Stofftrennung ionogener Lösungen wie der Elektrolyse, der Membranelektrolyse und der Elektrodialyse mit bipolaren Membranen eingesetzt, wobei die geladenen Teilchen aus einer wässrigen Lösung im elektrischen Feld durch die Ionentauschermembran transportiert werden. Derartige Verfahren lassen sich wirtschaftlich zur Wertstoffgewinnung, zum Beispiel Natronlauge oder Chlor, zur Abwasserbehandlung oder zum Recyclen von Prozesshilfsstoffen einsetzen.

Üblicherweise werden die Ionentauschermembranen dabei ähnlich wie in den vorstehend beschriebenen Brennstoffzellen in plattenförmiger Ausbildung parallel zueinander eingesetzt. Die durch den plattenweisen, parallelen Aufbau erfolgte Kompartimentierung bedingt eine eigene Zu- beziehungsweise Abfuhr für die einzelnen Kompartimente. Die komplizierte Strömungsführung und die entsprechend hohe Anzahl der zu installierenden Kreisläufe verursachen einen hohen apparativen Aufwand und sind wartungsintensiv. Zudem ist der Abstand von Elektrode zu Elektrode in einer Ionentauschermembranen aufweisenden herkömmlichen Zelle daher nach unten limitiert, dies bringt einen höheren elektrischen Widerstand und damit einen höheren Spannungsabfall mit sich.

Bei SOFC [solid oxide fuel cell; Festoxidbrennstoffzelle] mit planarer Ausführung ist die Gasversorgung und Energieabfuhr auf Grund der Dichtungsproblematik nachteilig. Bei einer röhrenförmigen Ausführung der SOFC entstehen Probleme wegen der schlechten Leistungsdichte. Als nachteilig erweisen sich ebenso die hohe Betriebstemperatur, die hohe Wärmekapazität, die lange Aufheizzeit, Materialprobleme und der allgemein hohe Fertigungsaufwand.

Der vorliegenden Erfindung liegt daher das technische Problem zugrunde, eine Vorrichtung bereitzustellen, die die vorgenannten Nachteile überwindet, insbesondere als Brennstoffzellenelement, Brennstoffzellenmodul, SOFC-Grundelement und/oder Ionentauschermembran so eingesetzt werden kann, dass eine effiziente Verfahrensführung mit möglichst geringem apparativen Aufwand erzielt werden kann. Der Erfindung liegt auch das Problem zugrunde, ein Verfahren zu der Herstellung der Vorrichtung bereitzustellen, das einfach, schnell und kontinuierlich durchzuführen ist und darüber hinaus die Herstellung bisher nicht zur Verfügung stehender Brennstoffzellenelemente und Ionentauschermembranen erlaubt.

Die Erfindung löst dieses technische Problem durch die Bereitstellung eines tubulären Verbundes aus einem tubulären Geflecht aus Bündeln und/oder Drähten eines Elektronen-leitenden Materials und einer darüber angeordneten Schicht eines Ionen-leitenden Materials wie nach Anspruch 1. Ein derartiger als Rohr oder Schlauch ausgeführter tubulärer Verbund definiert also einen durch das, innen liegende, Geflecht und die, nach außen hin gewandte, Schicht zylindrisch umschlossenen Hohlraum oder Lumen mit zwei endständigen Öffnungen und trennt diesen Hohlraum von der Umgebung ab. Ein derartiger tubulärer Verbund kann in seiner Grundstruktur sowohl als wesentlicher Bestandteil einer PEM-Brennstoffzelle als auch als Bestandteil einer Ionentauschermembran sowie als Bestandteil eines Brennstoffzellenmoduls wie auch als Bestandteil eines tubularen SOFC-Grundelements eingesetzt werden. Die erfindungsgemäßen tubulären Verbünde, Grundelemente, Brennstoffzellenmodule und/oder Ionentauschermembranen können ebenso als wesentlicher Bestandteil einer Methanol- und/oder Methan-Brennstoffzelle, beispielsweise in einer Direkt-Methanol-Brennstoffzelle, eingesetzt werden. Die Verwendung eines Geflechts aus Bündeln und/oder Drähten eines Elektronen-leitenden Materials vergrößert in vorteilhafter Weise die Elektrodenoberfläche des so hergestellten tubulären Verbundes, darüber hinaus erhöht sie vorteilhafterweise die mechanische Festigkeit und dient zur Stromabfuhr. Zudem wird die erforderliche Porosität für den Durchtritt der Edukte bereitgestellt. Die Herstellung eines solchen tubulären Verbundes kann kontinuierlich erfolgen, wobei sich auch sehr kleine Durchmesser des Verbundes mit kleinen Abständen zwischen verschiedenen Lagen des Elektronenleitenden Materials realisieren lassen. Durch den tubulären beziehungsweise tubularen Aufbau des erfindungsgemäßen Verbundes ist es möglich, eine Vielzahl von mit ihren Längsachsen parallel zueinander angeordneten tubulären Verbünden in einem Modul zusammenzufassen, wobei auf engem Raum und mit kleinen Dimensionen ein effizienter Einsatz als PEM-Brennstoffzellenelement, Brennstoffzellenmodul, SOFC-Grundelement oder Ionentauschermembran möglich ist. Die bei der üblichen plattenweisen Anordnung der Membranen notwendige aufwendige Strömungsführung und komplizierte Kompartimentierung entfällt weitgehend.

Hierdurch werden gegenüber dem Stand der Technik weitere Verbesserungen erreicht, wie beispielsweise die Erhöhung der Leistungsdichte, die erleichterte Stoffzufuhr und Energieabfuhr, die niedrigeren Betriebstemperaturen durch den dünneren Elektrolyten, niedrigere Gehäusetemperaturen durch deaktivierte Enden, eine rationelle und kostengünstigere Fertigung sowie eine variable Strömungsführung im Außenraum.

Im Zusammenhang mit der vorliegenden Erfindung wird unter einem Elektronen-leitenden Material ein zur Leitung von Elektronen befähigtes Material, insbesondere eine Elektrode, die sowohl als Anode oder Kathode ausgeführt sein kann, verstanden. Das als Elektrode fungierende Elektronen-leitende Material ist erfindungsgemäß dadurch ausgezeichnet, dass es auch als Stützgewebe für den tubulären Verbund dient und, in besonders bevorzugter Ausführungsform, katalytische Aktivität aufweist. Das Elektronen-leitende Material ist als Geflecht aus Bündeln und/oder Drähten ausgeführt. In bevorzugter Ausführungsform kann ein solches Geflecht acht bis achtundvierzig Bündel enthalten. Besteht das Geflecht erfindungsgemäß aus Einzelfasern, so ist es bevorzugt, bis zu 120 Einzelfasern vorzusehen. In besonders bevorzugter Weise weisen die Bündel einen Durchmesser von 0,1 bis 2 mm, vorzugsweise 0,2 bis 2 mm, eine Flechtdicke von 0,02 bis 0,4 mm, insbesondere 0,02 bis 0,3 mm, bevorzugt 0,1 bis 0,2 mm und Steigungswinkel von 30° bis 60° auf.

In einer weiteren bevorzugten Ausführungsform sind die Bündel aus einer Anzahl einzelner Kohlefasern aufgebaut. Die Anzahl der Kohlefasern pro Bündel beträgt vorzugsweise 50 bis 1000, insbesondere 100 bis 1000. Zur Verbesserung der elektrischen Leitfähigkeit können einzelne Bündel des Geflechts durch Metalldrahtbündel oder Metalldrähte ersetzt werden. Erfindungsgemäß ist es auch möglich, einzelne Kohlefasern eines Bündels durch Metalldrähte zu ersetzen.

Der Durchmesser der Kohlefasern beträgt in besonders bevorzugter Ausführungsform 7 bis 20 µm, bevorzugt 7 bis 12 µm.

In bevorzugter Weise beträgt der Innendurchmesser des tubulären Verbundes 0,2 bis 3 mm, insbesondere 0,2 bis 2 mm.

Die Erfindung sieht in einer weiteren bevorzugten Ausführungsform also auch vor, dass das Geflecht neben den Kohlefaserbündeln zusätzlich Metalldrähte aufweist. Selbstverständlich kann auch vorgesehen sein, dass das Geflecht überhaupt keine Kohlefaserbündel, sondern ausschließlich ein Metalldrahtgeflecht oder ein Geflecht aus Bündeln einer Anzahl von Metalldrähten darstellt.

Darüber hinaus können auch im Lumen des tubulären Verbundes in elektrisch-leitendem Kontakt zu dem dem Lumen zugewandten Geflecht Drähte eingebracht werden, die zur Stabilisierung und Stromabfuhr dienen. Bevorzugt wird dabei die Verwendung von Einzeldrähten, die dergestalt parallel gebündelt werden, dass zum Beispiel ein regelmäßiges Sechseck entsteht. In das Lumen des Geflechts kann aber auch ein Einzeldraht eingebracht werden, der auf seiner Außenseite in Längsrichtung so strukturiert ist, dass Längskanäle zur zum Geflecht hingewandten Seite entstehen, das heißt zwischen Verbundinnenseite und Metalldraht. Die Bildung von Längskanälen zwischen Innengeflecht und Lumendraht oder Lumendrähten kann auch durch Verwendung einer Litze erfolgen.

In einer besonders bevorzugten Ausführungsform der Erfindung sind die Metalldrähte Edelmetalldrähte oder Drähte aus korrosionsfesten Metallen oder Legierungen, zum Beispiel Nickel-, Platin-, Palladium-, Gold- oder Silberdrähte oder Drähte aus rostfreiem Stahl. Der Durchmesser dieser Drähte beträgt in bevorzugter Ausführungsform von 10 bis 300 µm, bevorzugt 10 bis 150 oder 150 bis 250 µm. Selbstverständlich sind jedoch auch andere Metalle oder Metallegierungen erfindungsgemäß einsetzbar. Die Erfindung umfasst auch den Einsatz von nur unter bestimmten Bedingungen elektrisch leitenden Materialien, wie Supra- oder Halbleitern, in dem oder als Geflecht des Elektronen-leitenden Materials.

Im Zusammenhang mit der vorliegenden Erfindung wird unter dem Ionen-leitenden Material ein Medium verstanden, das in der Lage ist, Ionen zu leiten, also ein elektrolytisches Material. Das erfindungsgemäß einsetzbare Ionen-leitende Material kann fest, zum Beispiel ein Festoxid, Metalloxid, eine Salzschmelze etc., oder flüssig, zum Beispiel eine wässrige Salzlösung, sein. Das Ionen-leitende Material ist vorzugsweise als Membran, insbesondere technische, also synthetische Membran, ausgeführt, wobei, falls notwendig, das Ionen-leitende Material vernetzende Zusätze aufweist, und aus organischen, zum Beispiel Polysulfonen, Polyethersulfonen, Polyetherketonen, Polyetheretherketonen oder anderen aromatischen Polyarylethern oder anorganischen Materialien, zum Beispiel Aluminiumoxid, Zirkoniumoxid, Kohlenstoffasern bestehen kann beziehungsweise diese unter gegebenenfalls erforderlichem Einsatz von Ionenleitern enthält. Die Membran weist in besonders bevorzugter Ausführungsform eine Dicke von 10 bis 150 µm auf. Erfindungsgemäß kann auch der Einsatz von Ampholyten oder Polyelektrolyten vorgesehen sein. Besonders bevorzugt umfasst die Erfindung den Einsatz eines Festoxides oder Polymers, insbesondere des Elektrolyten NAFION® oder anderer sulfonierter perfluorierter Polymere oder sulfonierte aromatische Polyetheretherketone oder anderer anionischer Polyarylether auch in Form von Copolymeren oder Blends. Im Fall des Einsatzes eines Festelektrolyten muss für die Erzielung einer geeigneten Leitfähigkeit ein entsprechend hoher Wassergehalt vorgesehen sein. Die erfindungsgemäß besonders bevorzugte Verwendung einer Membran als Ionen-leitendem Material kann auch in Form von funktionell und/oder strukturell unterschiedliche Bereiche aufweisenden Membranen, zum Beispiel bipolaren Membranen erfolgen.

In einer bevorzugten Ausführungsform betrifft die Erfindung einen tubulären Verbund aus einem Geflecht aus Bündeln und/oder Drähten eines Elektronen-leitenden Materials und einer darüber angeordneten Schicht einen Ionen-leitfähigen Materials, wobei der tubuläre Verbund als Brennstoffzellenelement ausgeführt ist und sowohl zwischen dem Geflecht aus Bündeln und/oder Drähten eines Elektronen-leitenden Materials und der Schicht eines Ionen-leitfähigen Materials als auch über der Schicht des Ionen-leitenden Materials jeweils mindestens eine Katalysatorschicht angeordnet ist und wobei die nach außen orientierte, also obere, Katalysatorschicht von einem weiteren Geflecht eines Elektronen-leitenden Materials überdeckt ist. Die Katalysatorschicht dringt während des Herstellprozesses auch in das Geflecht und seine Zwischenräume ein, so dass sich ein inniger Verbund zwischen Geflecht und Katalysatorschicht ohne scharfe räumliche Trennung bildet. Ebenso kann das Geflecht sich zumindest teilweise in eine darunter liegende Katalysatorschicht eindrücken.

Ein derartiger tubulärer Verbund kann selbstverständlich nicht nur als Brennstoffzellenelement, sondern auch als Sauerstoff-, Wasserstoff-, Kohlenmonoxid-, Methanol- oder Methan-Sensor eingesetzt werden.

Die mindestens eine Katalysatorschicht dient der Umwandlung der als Brennstoff oder zu messendem Stoff, zum Beispiel Wasserstoff, Sauerstoff, Methan, Methanol, Kohlenwasserstoffe oder Kohlenstoffmonoxid zugeführten Substanz in ein Ion. Auf diese Schicht oder diese Schichten kann erfindungsgemäß auch verzichtet werden, beispielsweise wenn katalytisch aktive Metalldrähte oder mit einer katalytisch aktiven Substanz beschichtete Kohlefasern oder Metalldrähte im Geflecht vorgesehen sind. Als derartige katalytisch aktive Substanz können ein oder mehrere Elemente der VIII. Nebengruppe des PSE, zum Beispiel Platin, Palladium, Ruthenium, Rhodium, Iridium und Nickel oder Legierungen daraus eingesetzt werden, gegebenenfalls zusammen mit Kohlenstoff, zum Beispiel in Form von Graphit, insbesondere Graphitpulver, Russ oder Kohle, insbesondere Aktivkohle. Erfindungsgemäß kann auch vorgesehen sein, mehrere unterschiedliche Katalysatoren oder Katalysatorschichten in unmittelbarer räumlicher Nähe oder Einheit auszuführen.

Die Dicke einer Katalysatorschicht beträgt vorzugsweise von 1 bis 70 µm.

In einer besonders bevorzugten Ausführungsform betrifft die Erfindung ein vorstehend erläutertes PEM-Brennstoffzellenelement, wobei die Katalysatorschicht ein Platin-Kohlenstoff- oder Palladium-Kohlenstoff-Gemisch enthält oder aus diesen besteht.

In einer weiteren bevorzugten Ausführungsform weist die Katalysatorschicht Hydrophobierungs- und/oder Protonenleitermaterialzusätze auf, zum Beispiel Pulver aus aromatischem Polyetheretherketon, PTFE-Pulver, NAFION® oder Polyelektrolyte.

Ein derartiges Brennstoffzellenelement, zum Beispiel ein PEM- oder SOFC-Brennstoffzellenelement kann erfindungsgemäß einen Innendurchmesser von 200 bis 3000 µm, bevorzugt 200 bis 2000 µm aufweisen.

Eine Vielzahl erfindungsgemäßer Brennstoffzellenelemente können mit ihren Längsachsen parallel zueinander zu einem Modul zusammengefasst werden. Sie erlauben dann eine Strömungsführung der Edukte, zum Beispiel Wasserstoff und Sauerstoff, in Form eines Kreuzstromes, Gegenstromes, Gleichstromes und Gemischtstromes wodurch Stofftransportwiderstände minimiert und Triebkräfte großgehalten werden, was bessere Wirkungsgrade zur Folge hat. Durch die hohe Packungsdichte kann gleichzeitig eine hohe Leistungsdichte erreicht werden. Zur Erzielung des geforderten Stromes und der geforderten Spannung können die Brennstoffzellenelemente parallel oder in Serie verschaltet werden.

Die Stromabfuhr der Außenelektroden, das heißt des äußeren, also des zur Oberfläche gewandten, Geflechtes des tubularen Verbundes kann auch durch in Kontaktbringen mit einem Außenanschluss, insbesondere von korrosionsstabilen elektrisch leitenden Materialien wie Drähten, Gittern, Geweben oder fluidal durchströmbaren elektrisch leitenden Streifen oder Platten auf einzelne oder mit ihren Längsachsen parallel zueinander zu einer Ebene zusammengefassten Brennstoffzellenelementen erfolgen. Diese elektrisch leitenden Materialien können aus korrosionsstabilen Metallen oder Metalllegierungen aber auch aus Graphit, Kohlenstoff, oder anderen elektrisch leitfähigen und korrosionsstabilen Materialien bestehen. Diese Elektronen-leitenden Materialien können in ihrer Form der Form der tubulären Verbünde angepasst sein, so dass ein optimaler elektrischer Kontakt zwischen beiden gegeben ist. Zur elektrischen Trennung und Isolierung der Brennstoffzellenelementschichten können elektrisch nichtleitende Materialien wie zum Beispiel nichtleitende Kunststoffe und nichtleitende Keramiken in Form von zum Beispiel Drähten, Gittern, Geweben sowie gasdurchlässigen Streifen und Platten verwendet werden.

Die Erfindung ermöglicht also die Zufuhr von zum Beispiel molekularem Wasserstoff in und durch den Hohlraum des tubulären Verbundes. Der molekulare Wasserstoff verlässt den Hohlraum des tubulären Verbundes, dringt durch das als Anode ausgeführte Geflecht aus Bündeln und/oder Drähten eines Elektronen-leitenden Materials hindurch, welches gleichsam als Poren-aufweisende Schicht wirkt, und wird dabei ebenso wie in der darüber angeordneten Katalysatorschicht zu einzelnen Wasserstoffatomen und letztendlich Protonen umgewandelt. Die Protonen wandern durch die über der Katalysatorschicht angeordnete Ionen-leitende Schicht, zum Beispiel die Membran, in die Richtung des als Kathode ausgeführten Geflechts eines Elektronen-leitenden Materials. Zum Beispiel Sauerstoff oder ein sauerstoffhaltiges Gasgemisch wie Luft, welches sich außerhalb des tubulären Verbundes befindet und beispielsweise senkrecht, parallel oder entgegengesetzt zu dem Wasserstoffstrom einem Modul zugeführt wird, kommt mit dem außen liegenden Geflecht des Elektronenleitenden Materials in Kontakt. Dort und an der nach innen unmittelbar folgenden Katalysatorschicht wird der molekulare Sauerstoff zu Sauerstoffatomen und Sauerstoffionen umgewandelt. Die sich im Bereich der innen liegenden Membran treffenden Protonen und Sauerstoffionen bilden Wasser, welches als Wasserdampf einerseits durch die Membran ins Lumen und andererseits durch die Katalysatorschicht und die Kathode in den Außenraum abgeführt wird. Gleichzeitig wird Elektrizität erzeugt.

Die Zufuhr des Brennstoffs kann auch über die Außenseite des tubulären Verbundes erfolgen, sodass die Luft, der Sauerstoff oder ein anderes Oxidants über das Lumen zugeführt wird.

Die Erfindung sieht selbstverständlich auch vor, dass die Katalysatorschicht in das Geflecht des Elektronen-leitenden Materials integriert ist, das heißt, dass die Katalysatorschicht die einzelnen Bündel, Fasern und/oder Drähte des Geflechts aus dem Elektronen-leitenden Material teilweise oder vollständig bedeckt und/oder zwischen diesen Elementen angeordnet ist. Eine distinkte räumliche Trennung von Katalysatorschicht und Anode oder Kathode muss daher erfindungsgemäß nicht vorliegen.

Der tubuläre Verbund kann nicht nur als Brennstoffzellenelement, sondern auch als Elektrolyseur verwendet werden.

Die Erfindung betrifft auch einen tubulären Verbund aus einem Geflecht aus Bündeln und/oder Drähten eines Elektronen-leitenden Materials und einer darüber angeordneten Schicht eines Ionen-leitfähigen Materials, wobei der tubuläre Verbund als Ionentauschermembran ausgeführt ist und vorzugsweise zwischen dem Geflecht des Elektronen-leitenden Materials und der Schicht eines Ionen-leitenden Materials ein Spacer angeordnet ist, der der Vergrößerung des durchströmbaren Volumens dient. Erfindungsgemäß kann vorgesehen sein, den Spacer als Geflecht aus Bündeln und/oder Fasern eines Ionen-leitenden oder neutralen das heißt elektrisch isolierenden Materials auszuführen. Der Spacer kann zum Beispiel aus Polypropylen, Polyethylen, Ionentauschermaterial oder ähnlichem bestehen oder dieses enthalten. In bevorzugter Weise ist das als Spacer ausgeführte Geflecht gröber, das heißt es weist eine geringere Flechtdichte, zum Beispiel von 1 bis 20 % Deckung, und geringere Steigungswinkel, zum Beispiel von 10° bis 45° der Ionen-leitenden oder neutralen Fasern oder Bündel auf.

Das Ionen-leitende Material kann als KationenAustauscher oder Anionen-Austauscher ausgeführt sein. Selbstverständlich ist es auch möglich, mehrere Schichten eines oder verschiedener Ionenleitender Materialien übereinander anzuordnen. Die Erfindung betrifft auch den Einsatz einer bipolaren Membran als Schicht eines Ionen-leitenden Materials.

In einer weiteren bevorzugten Ausführungsform kann eine vorgenannte Ionentauschermembran vorgesehen sein, wobei diese über der Schicht eines Ionen-leitenden Materials einen weiteren Spacer sowie ein weiteres Geflecht eines Elektronen-leitenden Materials aufweist. Diese Schichtenfolge aus Spacer und Elektronen-leitendem Material kann als Gegenelektrode dienen. Auf die letztgenannte Anordnung aus Spacer und Elektronen-leitendem Material als Gegenelektrode kann dann verzichtet werden, wenn die Ionentauschermembranen in einem Modul mit Sammelelektrode zusammengefasst sind.

Die Erfindung sieht also auch vor, dass eine erfindungsgemäße Ionentauschermembran zusammen mit einer Vielzahl weiterer derartiger Ionentauschermembranen zu einem Modul zusammengefasst sind. Ein derartiges Modul kann in bevorzugter Weise einen Rahmen sowie eine die mit ihren Längsachsen parallel zueinander angeordneten Ionentauschermembranen fixierende Matrix aufweisen. Ein derartiger Aufbau kann auch für den modulartigen Aufbau einer erfindungsgemäßen Brennstoffzelle vorgesehen sein.

Der Rahmen ist vorzugsweise aus Kunststoff oder korrosionsbeständigem Metall hergestellt. Erfindungsgemäß ist bevorzugt, die Matrix aus thermoplastischen, duroplastischen Polymeren oder Festoxiden herzustellen.

Die Erfindung betrifft in einer weiteren bevorzugten Ausführungsform ein sogenanntes tubulares SOFC-Grundelement, das aus mehreren Schichten wie folgt aufgebaut ist: Als Basis für alle weiteren Schichten dient beispielsweise ein Metallgeflecht, welches vorteilhafterweise aus Nickel besteht. Das Metallgeflecht dient insbesondere der Verbesserung der mechanischen Stabilität und zur Stromabfuhr. Dieses Metallgeflecht wird von einem grobporösen Elektrodenmaterial umschlossen, bei dem die Anode beispielsweise aus Ni-YSZ (Yttrium-stabilisiertes Zirkondioxid)-Cermet und die Kathode aus Strontium-dotiertem Lanthanmanganat bestehen kann. Das grobporöse Elektrodenmaterial ist in einer feinporösen Elektroden/Katalysatorschicht eingebettet, das grobporöse Elektrodenmaterial wird also von der feinporösen Elektroden/Katalysatorschicht umschlossen. Auf die Elektroden/Katalysatorschicht wird eine Elektrolytschicht aufgebracht, die beispielsweise aus Yttrium-stabilisiertem Zirkondioxid (YSZ) besteht. Auf die so erhaltene Elektrolytschicht wird wiederum eine feinporöse Elektroden/Katalysatorschicht aufgebracht. Die so gewonnene Schichtung wird von einem Metallgeflecht, beispielsweise aus Nickel, kombiniert mit grobporösem Elektrodenmaterial, beispielsweise aus Ni-YSZ-Cermet für die Anode und Strontium-dotiertem Lanthanmanganat für die Kathode, umschlossen. Das Aufbringen des Metallgeflechtes kombiniert mit dem grobporösen Elektrodenmaterial auf der feinporösen Elektroden/Katalysatorschicht erfolgt mit Vorteil in einem kombinierten Prozessschritt. Der so gewonnene kontinuierliche Schichtaufbau wird von mindestens einem Ende - das heißt Außen- und Innenelektrode - über zum Beispiel gelötete oder kaltverschweißte, einseitig elektrisch leitende Endhülsen konfektioniert. Der tubulare Aufbau erlaubt vorteilhafterweise einen kontinuierlichen Schichtaufbau mit integrierten Sinterschritten, die vorzugsweise mit einem Plasmaspritzverfahren kombiniert werden können. Mit Vorteil erlaubt eine dünne Elektrolytschicht von 30-800 µm, vorzugsweise 20 bis 200 µm, bevorzugt 30 bis 80 µm, insbesondere 30 bis 50 µm eine Betriebstemperatur von 600 bis 1000°C, bevorzugt 700 bis 850°C. Der Außendurchmesser des in einem kontinuierlichen Herstellprozess gewonnenen Geflechtes beträgt 0,25-10 mm, bevorzugt 0,8 bis 1,5 mm.

Die Erfindung betrifft in einer weiteren bevorzugten Ausführungsform eine Modulgestaltung, bei der die Materialien ihrem Wärmeausdehnungskoeffizienten angepasst sind. Vorteilhafterweise werden durch die im Folgenden dargestellten konstruktiven Maßnahmen temperaturbedingte, übermäßige Materialspannungen vermieden, wie beispielsweise durch die Deaktivierung der Enden zur Absenkung der Randtemperatur. Durch diese konstruktive Maßnahme entstehen vorteilhafterweise weniger oder keine Dichtungsprobleme durch Wärmedehnungsunterschiede zwischen Brennstoffzelle und Gehäuse. Eine weitere zweckmäßige konstruktive Maßnahme ist beispielsweise die Haarnadel-/Schlaufenform oder Krümmung der tubularen Grundelemente im Modul oder die einseitig gleitbare Pottung. Eine weitere vorteilhafte konstruktive Maßnahme ist aber auch ein keramisches Gehäuse mit angepasster Wärmeausdehnung. Das keramische Gehäuse kann vorteilhafterweise zur Erleichterung des Anschlusses der Arbeitsmedien und der Stromabfuhr in einem Metallgehäuse eingebettet sein. Eine temperaturbedingte, übermäßige Materialspannung kann jedoch vorteilhafterweise auch mit einem Glaslot vermieden werden, das sich während des Betriebszustandes nahe am Schmelzpunkt befindet. Eine weitere Möglichkeit ist beispielsweise die Verwendung eines elektrisch isolierten elastischen Metallringes als Dichtung zwischen Gehäuse und Kapillarpackung, wie sie beispielsweise in der Metallkeramik im Dentalbereich zum Einsatz kommt. Mit Vorteil kann das Brennstoffzellenmodul so gebaut werden, dass der Betrieb im Kreuz-, Gleich-, und/oder Gegenstrom möglich ist.

Vorzugsweise kann das Brennstoffzellenmodul wie auch das Grundelement zur Energieerzeugung oder Traktion beispielsweise als Antrieb von zum Beispiel Kraftfahrzeugen, Lastkraftwagen, Omnibussen und Flugobjekten eingesetzt werden.

Das tubulare Grundelement und das Brennstoffzellenmodul ermöglichen vorteilhafterweise eine einfach zu fertigende, aufgrund der Materialeinsparung schnell aufheizbare und damit schnell betriebsbereite tubulare Festoxidbrennstoffzelle. Durch die tubulare Ausführung ist mit Vorteil eine Einbettung in einem Gehäuse möglich, die beispielsweise im Vergleich zur bekannten Flachzellenausführung eine deutlich leichtere Gaszufuhr und Energieableitung ermöglicht. Die dünnere Elektrolytschicht erlaubt den Betrieb bei 600 bis 1000°C, bevorzugt von 700 bis 850°C. Durch die Ausführung der Einzelelemente in tubularer Geometrie und im Millimetermaßstab von 0,25 bis 10 mm, bevorzugt von 0,8 bis 1,5 mm, ist vorteilhafterweise eine hohe Leistungsdichte des Brennstoffzellenmoduls möglich.

Die Erfindung betrifft auch ein Verfahren zur Herstellung eines erfindungsgemäßen tubulären Verbundes, wobei sich das Verfahren durch seine kontinuierliche Durchführbarkeit auszeichnet. Gemäß des erfindungsgemäßen Verfahrens werden, beispielsweise mittels einer herkömmlichen Flechtmaschine, in einem ersten Verfahrensschritt Bündel aus Kohlefasern und/oder Metalldrähten eines Elektronen-leitenden Materials zu einem Schlauch geflochten. Das Elektronen-leitende Material der Erfindung, welches vorzugsweise als Geflecht aus Bündeln von Kohlefasern und/oder Metalldrähten ausgeführt ist, wird entsprechend des jeweiligen Einsatzzweckes des tubulären Verbundes so geflochten, dass die zu transportierenden Stoffe wie Wasserstoff, Sauerstoff, Ionen und Flüssigkeiten das Geflecht passieren können, das heißt das Geflecht weist Porosität auf. Gleichzeitig ist das Geflecht so ausgeführt, dass es als Stützgewebe für den tubulären Schlauch dient und diesem die erforderliche Flexibilität und Festigkeit bei gleichzeitig hoher Korrosionsbeständigkeit verleiht. Die Flechtdichte und der Steigungswinkel der einzelnen geflochtenen Bündel werden dem erwünschten Durchmesser des Schlauchs angepasst. Sofern der Schlauch im wesentlichen aus Kohlefaserbündeln hergestellt werden soll, kann zur Verbesserung der elektrischen Leitfähigkeit die Zugabe von Metalldrahtbündeln vorgesehen werden. Mit Vorteil kann sich zusätzlich eine Vielzahl Metalldrähte auch im Lumen des Geflechtes befinden. Anstatt eines Metalldrahtbündels kann vorteilhafterweise auch ein auf seiner Außenseite sternförmig strukturierter Einzeldraht eingesetzt werden. Die Verschaltung erfolgt in Parallel- und/oder Serienschaltung. Der geflochtene Schlauch wird anschließend in einem zweiten Verfahrensschritt auf seiner Außenseite, also der dem Schlauchhohlraum abgewandten Seite, beispielsweise mittels Gießdüsen oder Spritzdüsen mit einer Ionen-leitenden Schicht überzogen. Diese bildet vorzugsweise, nach gegebenenfalls erfolgender Trocknung, eine Ionen-leitende, insbesondere Ionen-selektive Membran.

Zur Herstellung eines PEM-Brennstoffzellenelementes wird unmittelbar im Anschluss an das Flechten des Schlauches eine Katalysatorschicht, vorzugsweise inklusive Hydrophobisierungs- und/oder Protonenleitermaterialzusätzen, auf das Geflecht aufgebracht, wobei dies in bevorzugter Weise in Form einer Paste über eine Durchlaufdüse geschieht. Das Aufbringen dieser Schicht eliminiert die Unebenheiten der Flechtungen, so dass eine glatte Oberfläche erzeugt wird, die eine hervorragende Voraussetzung für das Aufbringen der im Anschluss aufgebrachten Ionen-leitenden Schicht darstellt. Erfindungsgemäß kann auch vorgesehen sein, auf das Geflecht zur Eliminierung der Unebenheiten eine Ausgleichsschicht aufzubringen. Diese Ausgleichsschicht kann zur Einsparung von Katalysatormaterial Kohle, insbesondere Aktivkohle, Graphit, insbesondere Graphitpulver, Russ oder Gemische davon enthalten, vorzugsweise zusammen mit Bindemitteln, zum Beispiel Polymeren. Auf diese Ausgleichsschicht wird dann die Katalysatorschicht aufgebracht. Das Aufbringen der Schicht eines Ionen-leitenden Materials geschieht wie oben dargestellt, wobei Schichtstärken von 10 bis 150 µm bevorzugt werden. Nach einer gegebenenfalls notwendigen Trocknung wird wie vorstehend beschrieben eine weitere Katalysatorschicht aufgetragen. Auf diese Katalysatorschicht kann vorzugsweise eine weitere, wie vorstehend beschriebene, Ausgleichsschicht aufgebracht werden. Anschließend wird um diesen Verbund ein außen liegendes Geflecht eines Elektronen-leitenden Materials aus Bündeln und/oder Drähten geflochten. Die eingesetzten Geflechte weisen eine Flechtdichte von 50 bis 97 %, bevorzugt 50 bis 90 % auf, bestehen aus Einzelsträngen mit 50 bis 1000, bevorzugt 100 bis 1000 Filamenten, wobei jedes Filament einen Durchmesser zwischen 7 bis 20 µm, bevorzugt 7 bis 12 µm aufweisen kann und aus Kohlefasern und/oder Metalldrähten bestehen kann. Gegebenenfalls können auch Einzelstränge eingesetzt werden, die nicht aus Filamenten, sondern aus Volloder Hohlfasern bestehen. Der Flechtwinkel liegt zwischen 30° und 60°.

Die Herstellung der SOFC-Brennstoffzellenelemente erfolgt wie vorstehend für die PEM-Brennstoffzellenelemente erläutert, mit der Ausnahme, dass keine Hydrophobierungszusätze verwendet werden und im Anschluss an die Trocknung ein Sintervorgang unter üblichen Bedingungen stattfindet.

Zur Herstellung einer Ionentauschermembran wird, beispielsweise mittels einer herkömmlichen Flechtmaschine, ein Schlauch aus Bündeln und/oder Drähten eines Elektronen-leitenden Materials, zum Beispiel Kohlefasern oder Metalldrähte, geflochten. Dieses Geflecht weist eine gröbere Struktur als das Geflecht für ein Brennstoffzellenelement auf, wobei eine Flechtdichte von 5 bis 60% und ein Flechtwinkel von 10 bis 45° bevorzugt werden. Die Geflechte bestehen aus Einzelsträngen mit 50 bis 1000, bevorzugt 100 bis 1000 Filamenten, wobei jedes Filament einen Durchmesser von 7 bis 20 µm, bevorzugt 7 bis 12 µm aufweisen kann und aus Kohlefasern und/oder Metalldrähten bestehen kann. Gegebenenfalls können auch Einzelstränge eingesetzt werden, die nicht aus Filamenten, sondern aus Voll- oder Hohlfasern bestehen.

Über dieses als Elektrode fungierende Geflecht wird zur Vergrößerung des durchströmbaren Volumens ein weiteres grobes Geflecht als Spacer aus elektrisch isolierendem oder Ionen-leitendem Material aufgebracht, wobei eine Flechtdichte von 1 bis 20 % Deckung und Steigungswinkel von 10° bis 45° vorgezogen werden. Die Durchmesser der Einzelfasern des Spacer-Geflechtes liegen vorzugsweise bei 50 bis 300 µm, vorzugsweise 50 bis 100 um. Vor dem Auftragen der Ionen-leitenden Schicht wird als Grundlage für dieses Aufbringen eine temporär vorhandene Zwischenschicht aus einem leicht auswaschbaren Material, wie PVA (Polyvinylalkohol), aufgebracht.

Diese temporär vorhandene Zwischenschicht stellt die Basis für die vorzugsweise dünnschichtige Ionentauschermembran dar, die durch Applizieren einer Lösung oder durch Sprühen aufgebracht wird. Sofern das Aufbringen einer Gegenelektrode notwendig ist, wird anschließend ein weiterer Spacer aus Ionen-leitendem oder neutralem das heißt elektrisch isolierendem Material um die Schicht des Ionen-leitenden Materials geflochten, gefolgt von dem Flechten eines Geflechts aus einem Elektronenleitenden Material, welches als Außenelektrode dient. Nach Fertigstellung des Verbundes wird die Zwischenschicht ausgewaschen.

Die Erfindung wird im folgenden anhand der Figuren und dazugehöriger Beispiele näher erläutert.

Die Figuren zeigen:
- Figur 1: einen Querschnitt durch einen als Brennstoffzellenelement ausgeführten tubulären Verbund,
- Figur 2: einen Querschnitt durch einen als Ionentauschermembran ohne Gegenelektrode ausgeführten tubulären Verbund,
- Figur 3: einen Querschnitt durch einen als Ionentauschermembran mit Gegenelektrode ausgeführten tubulären Verbund,
- Figur 4: einen Querschnitt durch ein Modul, umfassend eine Vielzahl tubulärer Verbünde,
- Figur 5: eine perspektivische Seitenansicht eines Moduls der vorliegenden Erfindung,
- Figur 6: eine teilweise geschnittene Draufsicht auf ein erfindungsgemäßes Brennstoffzellenelement,
- Figur 7: einen Querschnitt durch einen tubulären Verbund, wobei im Lumen ein Metalldraht mit Fortsätzen eingebracht ist,
- Figur 8: einen Querschnitt durch einen tubulären Verbund, wobei die im Lumen vorhandenen Metalldrähte als Litze ausgebildet sind,
- Figur 9: einen Querschnitt durch einen tubulären Verbund, wobei im Lumen Metalldrähte, die eine Litze bilden, eingebracht sind,
- Figur 10: eine perspektivische Seitenansicht eines Modul aus tubulären Verbünden mit einem Gitter aus elektrisch leitendem Material als Außenanschluss zur Stromabfuhr der Außenelektroden, wobei die einzelnen tubulären Verbünde parallel geschaltet sind,
- Figur 11: eine perspektivische Seitenansicht einer Verschaltung zweier Module in Serienschaltung, wobei jedes Modul aus einem Rahmen und einer Vielzahl von parallel geschalteten und parallel angeordneten tubuläre Verbünden besteht, wobei die tubulären Verbünde innerhalb eines Moduls selbstverständlich anstatt parallel auch in Serie geschaltet sein können,
- Figur 12: eine perspektivische Seitenansicht einer Serienschaltung zweier tubulärer Verbünde und
- Figur 13: eine perspektivische Seitenansicht einer Parallelschaltung zweier tubulärer Verbünde.

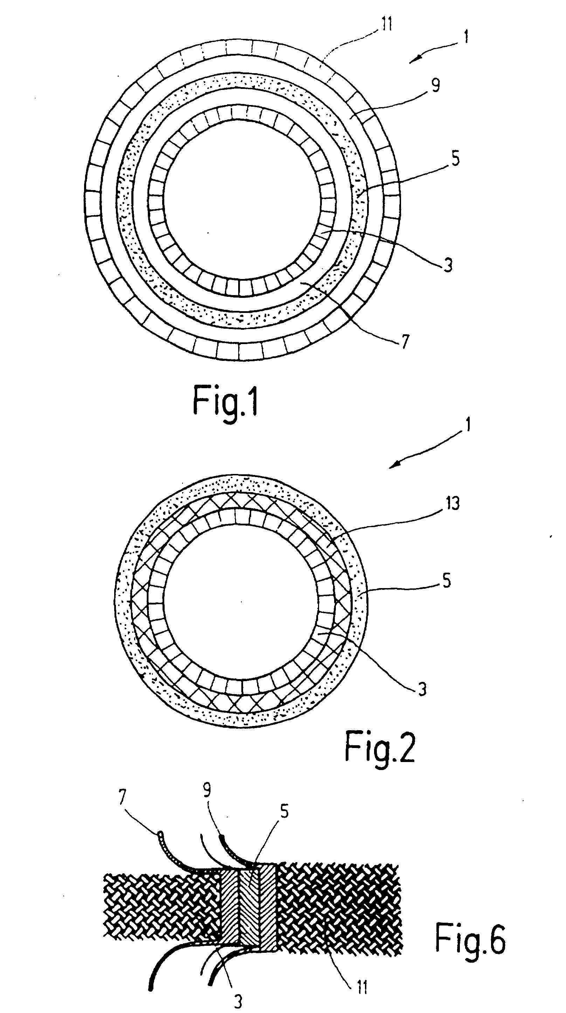

Figur 1 zeigt einen Querschnitt durch einen als Brennstoffzellenelement ausgeführten tubulären Verbund 1. Der tubuläre Verbund besteht aus einem Geflecht 3 aus Bündeln und/oder Drähten eines Elektronen-leitenden Materials und einer darüber angeordneten Katalysatorschicht 7 über die eine Schicht 5 eines Ionen-leitenden Materials aufgebracht ist. Auf der Schicht 5 ist eine Katalysatorschicht 9 angeordnet. Die Katalysatorschicht 9 wird von einem Geflecht 11 umschlossen, wobei das Geflecht 11 aus Bündeln oder Metalldrähten eines Elektronen-leitenden Materials besteht.

Figur 2 zeigt einen Querschnitt durch einen als Ionentauschermembran ohne Gegenelektrode ausgeführten tubulären Verbund 1. Der tubuläre Verbund 1 besteht aus drei verschiedenen Schichten, die direkt aufeinander folgend angeordnet sind. Wie im Ausführungsbeispiel der Figur 1 ist im Kern das Geflecht 3 angeordnet. Das Geflecht 3 wird von einem neutralen Spacer 13 umschlossen. Der Spacer 13 wird von der Ionen-leitenden Schicht 5 überdeckt.

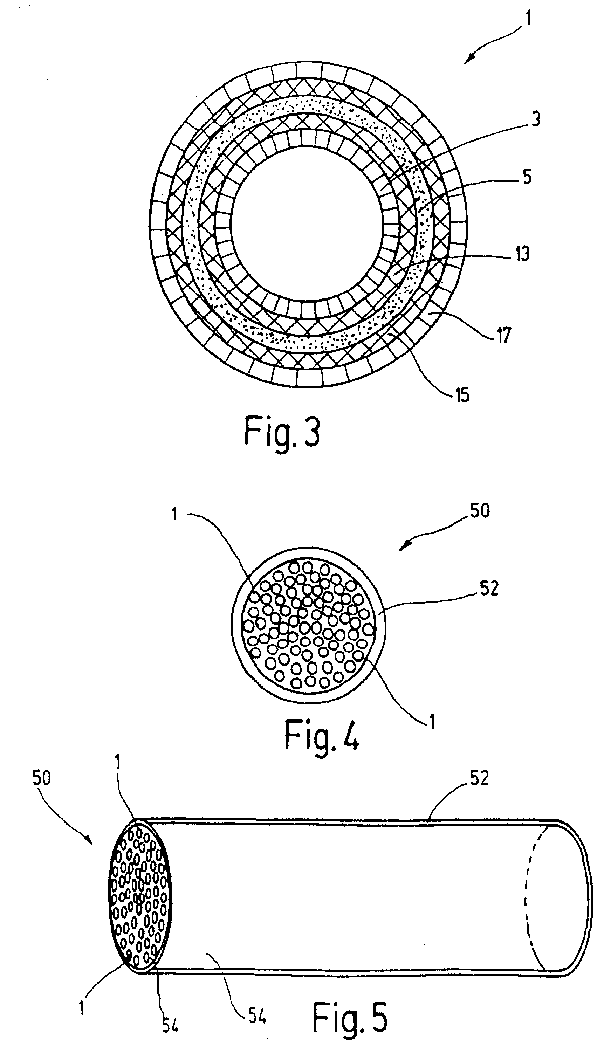

Figur 3 zeigt einen Querschnitt durch einen als Ionentauschermembran mit Gegenelektrode ausgeführten tubulären Verbund 1, der die gleiche Anzahl Schichten wie das Ausführungsbeispiel gemäß Figur 1 aufweist. Das Geflecht 3 bildet die zum Zentrum des tubulären Verbundes angeordnete Schicht, auf die der neutrale Spacer 13 aufgebracht ist. Der Spacer 13 ist von einer Ionen-leitenden Schicht 5 und darüber dem Spacer 15 überdeckt. Den äußeren Abschluss bildet ein Elektronen-leitendes Geflecht 17.

Figur 4 zeigt einen Querschnitt durch ein Modul 50, das aus einer Vielzahl tubulärer Verbünde 1 und einem zylindrischem Rahmen 52 aufgebaut ist. Der Rahmen 52 umschießt die Vielzahl der tubulären Verbünde 1 so, dass sie innerhalb des zylindrischem Rahmens 52 eine weitestgehend geordnete Struktur aufweisen.

Figur 5 zeigt eine perspektivische Seitenansicht des Moduls 50 gemäß Figur 4, das aus einer Vielzahl tubulärer Verbünde 1 und einem Rahmen 52 aufgebaut ist.

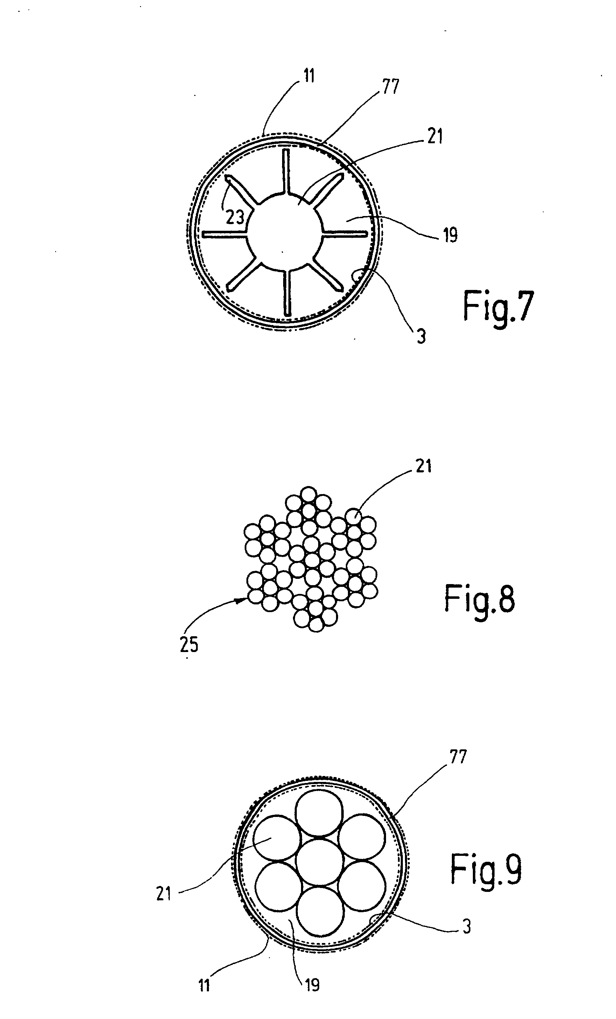

Figur 6 zeigt eine teilweise geschnittene Draufsicht auf das erfindungsgemäße Brennstoffzellenelement nach Figur 1. Der tubuläre Verbund besteht aus dem Geflecht 3 des Elektronen-leitenden Materials und der darüber angeordneten Katalysatorschicht 7, die von der Schicht 5 eines Ionen-leitenden Materials umschlossen ist. Die Schicht 5 ist von der Katalysatorschicht 9 überdeckt. Das äußere Geflecht 11 umschießt die Katalysatorschicht 9.

Figur 7 zeigt einen Querschnitt durch einen tubulären Verbund 1, wobei im Lumen 19 ein Metalldraht 21 mit Fortsätzen 23 eingebracht ist. Die Fortsätze 23 sind so angeordnet, dass sie mit dem Geflecht 3 in Kontakt stehen. Das Geflecht 3 ist von einer zusammengesetzten Katalysatorschicht 77 überdeckt, die auch andere Schichten wie Ausgleichsschichten umfasst. Den äußeren Abschluss des tubulären Verbundes 1 bildet wiederum ein Geflecht 11. Das Lumen 19 ist so ausgebildet, dass gasförmige und/oder flüssige Brennstoffe hindurch geführt werden können.

Figur 8 zeigt einen Querschnitt durch einen tubulären Verbund 1, wobei die Metalldrähte 21 strukturiert als Litze ausgebildet sind und in Gruppen 25 vorliegen.

Figur 9 zeigt einen Querschnitt durch einen tubulären Verbund 1, der im wesentlichen wie im Ausführungsbeispiel gemäß Figur 7 ausgebildet ist, wobei im Lumen 19 des tubulären Verbundes 1 Metalldrähte 21, die Litzen bilden, eingebracht sind. Die im Lumen 19 eingebrachten Metalldrähte 21 dienen zur Stabilisierung und Stromabfuhr. Die sieben Metalldrähte 21 sind dergestalt gebündelt, dass ein regelmäßiges Sechseck entsteht.

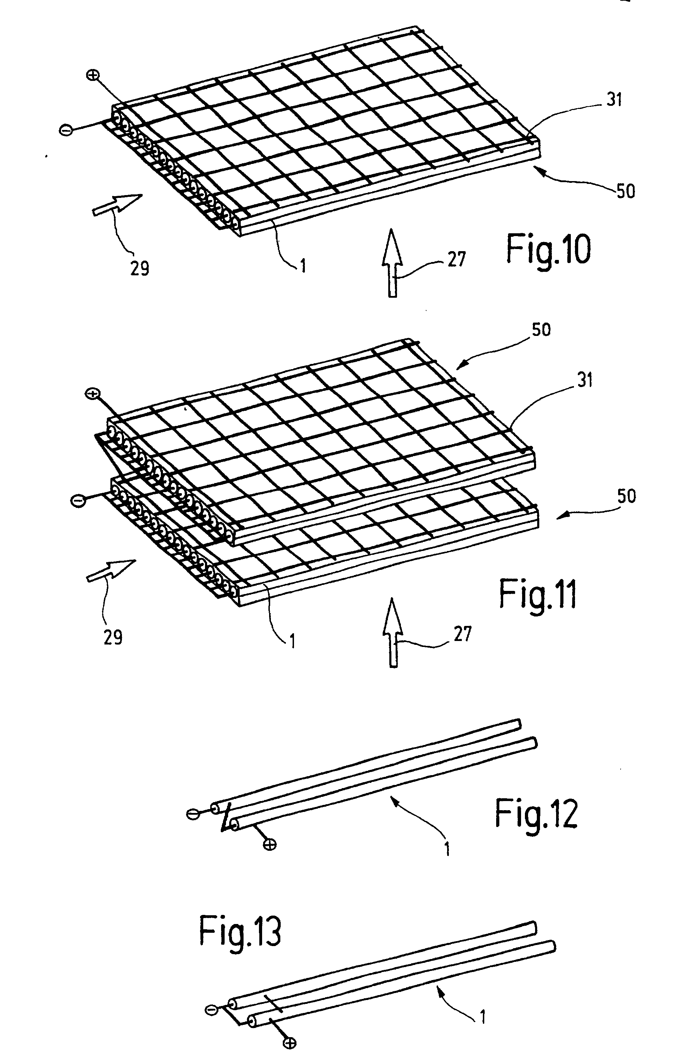

Figur 10 zeigt eine perspektivische Seitenansicht eines Moduls 50 aus tubulären Verbünden 1 mit einem als Elektronen-leitenden Gitter 31 ausgeführten Außenanschluss zur Stromabfuhr der Außenelektroden, wobei die einzelnen tubulären Verbünde 1 parallel geschaltet sind. In Richtung des Pfeils 27 wird Luft in das Modul 50 geführt, in Richtung des Pfeil 29 gelangt Brenngas in das Modul 50. Durch den tubulären Aufbau des Verbundes 1 ist es möglich, eine Vielzahl von mit ihren Längsachsen parallel zueinander angeordneten tubulären Verbünden 1 in einem Modul 50 zusammenzufassen, wobei auf engem Raum und mit kleinen Dimensionen ein effizienter Einsatz als PEM-Brennstoffzellenelement, Brennstoffzellenmodul, SOFC-Grundelement oder Ionentauschermembran möglich ist.

Figur 11 zeigt eine perspektivische Seitenansicht einer Verschaltung zweier Module in Serienschaltung, die im wesentlichen dem Aufbau gemäß Figur 10 entspricht. Unterschiedlich ist jedoch, dass das Modul 50 mit einem zweiten Modul 50 in Serie geschaltet ist.

Figur 12 zeigt eine perspektivische Seitenansicht einer Serienschaltung zweier tubulärer Verbünde 1. Die Serienschaltung dient der Erzielung der geforderten Spannung.

Figur 1'3 zeigt eine perspektivische Seitenansicht einer Parallelschaltung zweier tubulärer Verbünde 1.

### Beispiel 1: Herstellung einer PEM-Brennstoffzelle

Mit einer Flechtmaschine wird die rohrförmige Innenelektrode (bestehend aus Kohlefasern und/oder Metalldrähten) erzeugt. Dieses tubuläre Geflecht läuft zur Zentrierung auf einem Dorn bis zur Auftragsdüse für die Katalysatorbeschichtung. Dabei bestimmt der Düsendurchmesser die Dicke der Katalysatorschicht. Nach einer kurzen Trockenstrecke durch zum Beispiel Keramikheizkörper durchläuft das beschichtete Geflecht eine Ringspaltdüse, über die die ionenleitfähige Membran in Form einer Polymerlösung oder alternativ in Form eines Festoxides aufgetragen wird. Diesem Schritt schließt sich eine längere Trockenstrecke zur Austreibung des Lösungsmittels an. Nachfolgend wird die zweite Katalysatorschicht mit einer Auftragsdüse aufgebracht. Danach wird die Außenelektrode um die noch pastöse Katalysatorschicht geflochten. Die pastöse Konsistenz der Katalysatorschicht ermöglicht ein Eindringen der Geflechtstränge und damit einen innigen Verbund zwischen Katalysator und Elektrode. Zum Schluss durchläuft die Hohlfaser eine Endtrocknungsstrecke.

### Beispiel 2: Einsatz einer PEM-Brennstoffzelle

Die PEM-Brennstoffzelle kann in Biockheizkraftwerken, Kraftfahrzeugen, Flugobjekten, Kleingeräten und privaten Haushalten zur Stromerzeugung eingesetzt werden.

### Beispiel 3: Herstellung einer Ionentauschermembran

Mit einer Flechtmaschine wird die rohrförmige Innenelektrode (bestehend aus Kohlefasern und/oder Metalldrähten) erzeugt. Dieses tubuläre Geflecht läuft zur Zentrierung auf einem Dorn in eine zweite Flechtmaschine, auf der das gröbere Spacergeflecht aufgebracht wird. Es schließt sich das Aufbringen der auswaschbaren Zwischenschicht (zum Beispiel Polyvinylalkohol) an. Nach einer optionalen Trocknungsstrecke, wobei die gezielte Schrumpfung zur Oberflächenvergrößerung genutzt werden kann, wird die Ionentauschermembran in Form einer Polymerlösung oder eines Festoxid-Aerosols mit einer Düse aufgebracht und anschließend in einer Trocknungsstrecke das Lösungsmittel ausgetrieben. Soll die Ionentauschermembran eine bipolare Membran sein, folgt der ersten Membranbeschichtung eine weitere Beschichtung in Form einer Polymerlösung, wobei dieses Polymer oder das Festoxid die entgegengesetzte Ladung wie die erste Membranschicht aufweist. Das Lösungsmittel wird in einer zusätzlichen Trocknungsstrecke ausgetrieben.

Im nächsten Verfahrensschritt wird das grobe Spacergeflecht und die Außenelektrode in Form von Kohlefasern und/oder Metalldrähten um die Hohlfaser geflochten. Wird die tubuläre Ionentauschermembran in einem Modul mit Sammelelektrode eingesetzt, entfallen die beiden letzten Flechtschritte. Die lösliche Zwischenschicht im Spacer zwischen Innenelektrode und Ionentauschermembran wird vor der Modulherstellung oder vor der Inbetriebnahme der tubularen Ionentauschermembran herausgewaschen.

### Beispiel 4: Einsatz einer Ionentauschermembran

Die Ionentauschermembran kann zum Beispiel zur Entsalzung von Prozeß- und Abwässern eingesetzt werden. Beim Einsatz von bipolaren Ionentauschermembranen ist auch die Erzeugung von Laugen und Säuren aus den entsprechenden Salzen möglich, beispielsweise die Gewinnung von Milchsäuren und Calciumhydroxid aus Lactat.

## Patentansprüche

1. Tubulärer Verbund (1) aus einem Geflecht (3) aus Bündeln und/oder Drähten oder Fasern eines Elektronen-leitenden Materials und einer darüber angeordneten Schicht (5) eines Ionen-leitenden Materials, wobei der tubuläre Verbund hergestellt wird durch Flechten der Bündel und/oder Drähte oder Fasern zu einem Schlauch aus einem Geflecht dieses Elektronen-leitenden Materials und anschließendes Aufbringen des Ionen-leitenden Materials auf die dem Lumen des Schlauches abgewandte Außenseite des Geflechts und gegebenenfalls Trocknen.

2. Tubulärer Verbund nach Anspruch 1, wobei dieser in seinem Lumen (19) einen oder mehr als einen parallel zur Längsrichtung des Verbundes ausgerichtete(n) Metalldraht (21) enthält.

3. Tubulärer Verbund nach Anspruch 2, wobei die mehr als ein Metalldrähte (21) in Form einer Litze vorliegen.

4. Tubulärer Verbund nach einem der Ansprüche 1 bis 3, wobei der tubuläre Verbund (1) als Brennstoffzellenelement ausgeführt ist und sowohl zwischen dem Geflecht (3) aus Bündeln und/oder Drähten oder Fasern eines Elektronen-leitenden Materials und der Schicht (5) eines Ionen-leitenden Materials als auch über der Schicht (5) des Ionen-leitenden Materials jeweils mindestens eine Katalysatorschicht (7,9) angeordnet ist und wobei die nach außen orientierte Katalysatorschicht (9) von einem weiteren Geflecht (11) aus Bündeln und/oder Drähten oder Fasern eines Elektronen-leitenden Materials überdeckt ist.

5. Tubulärer Verbund nach einem der vorhergehenden Ansprüche, wobei die jeweils mindestens eine Katalysatorschicht (7,9) ein oder mehrere Elemente der VIII. Nebengruppe des PSE, gegebenenfalls zusammen mit Kohle, Russ oder Graphit enthält.

6. Tubulärer Verbund nach einem der vorhergehenden Ansprüche, wobei die mindestens eine Katalysatorschicht (7,9) Hydrophobierungszusätze und/oder Protonenleitermaterialzusätze umfasst.

7. Tubulärer Verbund nach einem der Ansprüche 1 bis 3, wobei der tubuläre Verbund (1) als Ionentauschermembran ausgeführt ist.

8. Tubulärer Verbund nach Anspruch 7, wobei zwischen dem Geflecht (3) aus Bündeln und/oder Drähten oder Fasern eines Elektronen-leitenden Materials und der Schicht (5) eines Ionen-leitenden Materials ein ionenleitfähiger oder neutraler Spacer (13) angeordnet ist.

9. Tubulärer Verbund nach Anspruch 8, wobei über der Schicht (5) eines Ionen-leitenden Materials ein weiterer Spacer (15) angeordnet ist, der von einem weiteren Geflecht (17) aus Bündeln und/oder Drähten oder Fasern eines Elektronen-leitenden Materials überdeckt ist.

10. Tubulärer Verbund nach Anspruch 8 oder 9, wobei der Spacer (13,15) als ein Geflecht aus elektrisch isolierenden oder Ionen-leitenden Fasern ausgeführt ist.

11. Tubulärer Verbund nach einem der vorhergehenden Ansprüche, wobei das Elektronen-leitende Material ein Elektronen-leitendes Stützgewebe, insbesondere eine Elektrode, ist.

12. Tubulärer Verbund nach einem der vorhergehenden Ansprüche, wobei die Bündel aus Kohlefasern aufgebaut sind, insbesondere mit einem Durchmesser des Bündels von 0,1 bis 2 mm, vorzugsweise 0,2 bis 2 mm.

13. Tubulärer Verbund nach einem der vorhergehenden Ansprüche, wobei die Drähte aus Metall sind oder dieses im wesentlichen enthalten.

14. Tubulärer Verbund nach einem der vorhergehenden Ansprüche, wobei das Metall ein korrosionsstabiles Metall oder eine korrosionsstabile Legierung ist.

15. Tubulärer Verbund nach einem der vorhergehenden Ansprüche, wobei die Kohlefasern und/oder Drähte einen Durchmesser von 10 bis 300 µm aufweisen.

16. Tubulärer Verbund nach einem der vorhergehenden Ansprüche, wobei der tubuläre Verbund ein Schlauch mit einem Innendurchmesser von 0,2 bis 3 mm ist.

17. Tubulärer Verbund nach einem der vorhergehenden Ansprüche, wobei das Ionen-leitende Material als Membran ausgeführt ist.

18. Tubulärer Verbund nach einem der vorhergehenden Ansprüche, wobei das Ionen-leitende Material aus der Gruppe der sulfonierten aromatischen Polyetheretherketone, Nafion®, anderer anionischer Polyarylether und/oder anderer sulfonierter perfluorrierter Polymere besteht.

19. Tubulärer Verbund nach einem der vorhergehenden Ansprüche, wobei das Ionen-leitende Material ein Oxid, insbesondere ein Festoxid umfasst.

20. Modul (50) aus einem, vorzugsweise zylindrisch ausgeführten, Rahmen (52) und einer Vielzahl von in dem Rahmen (52) parallel und längs zu der Längsachse des Rahmens (52) angeordneten tubulären Verbünden (1) nach einem der Ansprüche 1 bis 19.

21. Modul nach Anspruch 20, wobei das Geflecht in elektrisch leitendem Kontakt mit einer Elektronenleitenden Vorrichtung steht.

22. Modul nach Anspruch 21, wobei das der Oberfläche des tubulären Verbundes (1) zugewandte Geflecht (11,17) in elektrisch leitendem Kontakt mit einem Außenanschluss (31) steht.

23. Modul nach einem der Ansprüche 20 bis 22, wobei das dem Lumen (19) des tubulären Verbundes (1) zugewandte Geflecht (3) in elektrisch leitendem Kontakt mit einem oder mehreren Metalldrähten (21) steht.

24. Modul nach einem der Ansprüche 20 bis 23, wobei in dem Rahmen (52) tubuläre Verbünde (81) enthalten sind, die elektrisch parallel geschaltet sind.

25. Modul nach einem der Ansprüche 20 bis 24, wobei die tubulären Verbünde (1) im Rahmen (52) in einer Matrix (54) angeordnet sind und die einzelnen Rahmen elektrisch in Reihe geschaltet sind.

26. Reaktor, enthaltend mindestens ein Modul nach einem der Ansprüche 20 bis 25 und ein Gehäuse.

27. Reaktor nach Anspruch 26, wobei dieser mindestens zwei Module enthält, die elektrisch untereinander in Serie oder parallel geschaltet sind.

28. Verfahren zur kontinuierlichen Herstellung eines tubulären Verbundes, insbesondere nach einem der vorhergehenden Ansprüche, wobei Bündel und/oder Drähte oder Fasern eines Elektronen-leitenden Materials zu einem Schlauch aus einem Geflecht dieses Elektronenleitenden Materials geflochten werden und anschließend auf die dem Lumen des Schlauches abgewandte Außenseite des Geflechts ein Ionen-leitendes Materials aufgebracht und gegebenenfalls getrocknet wird.

29. Verfahren nach Anspruch 28 zur Herstellung eines als Brennstoffzellenelement ausgeführten tubulären Verbundes, wobei sowohl nach dem Flechten des Schlauches als auch nach dem Aufbringen des Ionen-leitenden Materials jeweils mindestens eine Katalysatorschicht aufgebracht und gegebenenfalls getrocknet sowie anschließend auf die nach außen orientierte Katalysatorschicht ein weiteres Geflecht aus Bündeln und/oder Drähten oder Fasern eines Elektronen-leitenden Materials aufgebracht wird, vorzugsweise durch Flechten von Kohlefaserbündeln und/oder Metalldrähten.

30. Verfahren nach Anspruch 28 oder 29 zur Herstellung eines als Ionentauschermembran ausgeführten tubulären Verbundes, wobei Bündel und/oder Drähte oder Fasern eines Elektronen-leitenden Materials zu einem Schlauch aus einem Geflecht dieses Elektronen-leitenden Materials geflochten werden, anschließend ein Geflecht aus elektrisch isolierenden oder Ionen-leitenden Fasern als Spacer, eine Zwischenschicht aus einem leicht auswaschbaren Material und auf diese eine Schicht eines Ionen-leitenden Materials aufgebracht wird.

31. Verfahren nach einem der Ansprüche 28 bis 30, wobei die Zwischenschicht aus einem leicht auswaschbaren Material eine PVA (Polyvinylalkohol)-Schicht ist.

32. Verfahren nach einem der Ansprüche 28 bis 31, wobei auf die Schicht des Ionen-leitenden Materials ein weiteres Geflecht aus elektrisch isolierenden oder Ionen-leitenden Fasern als Spacer und anschließend eine weitere Schicht eines Elektronenleitenden Materials aufgebracht wird.

33. Verfahren nach einem der Ansprüche 28 bis 32, wobei die Zwischenschicht aus einem leicht auswaschbaren Material nach Herstellung des tubulären Verbundes oder nach dem Zusammenfügen der Einzelhohlfasern zu einem Modul ausgewaschen wird.

## Claims

1. Tubular composite (1) made of a mesh (3) composed of bundles and/or wires or fibres of an electron-conducting material and a layer (5) of an ion-conducting material arranged over that, wherein the tubular composite is produced by braiding the bundles and/or wires or fibres to form a tube of a mesh of this electron-conducting material and subsequently applying the ion-conducting material onto the outside of the mesh remote from the central cavity of the tube and if necessary drying same.

2. Tubular composite according to Claim 1, wherein in its central cavity (19) it contains one or more than one metal wire (21) oriented parallel to the longitudinal direction of the composite.

3. Tubular composite according to Claim 2, wherein the more than one metal wires (21) are present in the form of a strand.

4. Tubular composite according to one of Claims 1 to 3, wherein the tubular composite (1) is configured as a fuel cell element and at least one catalyst layer (7, 9) is respectively arranged between the mesh (3) composed of bundles and/or wires or fibres of an electron-conducting material and the layer (5) of an ion-conducting material as well as being arranged over the layer (5) of the ion-conducting material, and wherein the outwardly oriented catalyst layer (9) is covered by a further mesh (11) composed of bundles and/or wires or fibres of an electron-conducting material.

5. Tubular composite according to one of the preceding claims, wherein the respectively at least one catalyst layer (7, 9) contains one or more elements of the eighth sub-group of the periodic table, possibly together with coal, carbon black or graphite.

6. Tubular composite according to one of the preceding claims, wherein the at least one catalyst layer (7, 9) comprises hydrophobing additions and/or additions of proton conductor material.

7. Tubular composite according to one of Claims 1 to 3, wherein the tubular composite (1) is configured as an ion exchanger membrane.

8. Tubular composite according to Claim 7, wherein an ion-conductive or neutral spacer (13) is arranged between the mesh (3) composed of bundles and/or wires or fibres of an electron-conducting material and the layer (5) of an ion-conducting material.

9. Tubular composite according to Claim 8, wherein a further spacer (15), which is covered by a further mesh (17) composed of bundles and/or wires or fibres of an electron-conducting material, is arranged over the layer (5) of an ion-conducting material.

10. Tubular composite according to Claim 8 or 9, wherein the spacer (13, 15) is configured as a mesh composed of electrically insulating or ion-conducting fibres.

11. Tubular composite according to one of the preceding claims, wherein the electron-conducting material is an electron-conducting support fabric, in particular an electrode.

12. Tubular composite according to one of the preceding claims, wherein the bundles are constructed from carbon fibres, in particular with a diameter of the bundle of 0.1 to 2 mm, preferably 0.2 to 2 mm.

13. Tubular composite according to one of the preceding claims, wherein the wires are made of metal or have a substantial content thereof.

14. Tubular composite according to one of the preceding claims, wherein the metal is a corrosion-resistant metal or a corrosion-resistant alloy.

15. Tubular composite according to one of the preceding claims, wherein the carbon fibres and/or wires have a diameter of 10 to 300 µm.

16. Tubular composite according to one of the preceding claims, wherein the tubular composite is a tube with an inside diameter of 0.2 to 3 mm.

17. Tubular composite according to one of the preceding claims, wherein the ion-conducting material is configured as a membrane.

18. Tubular composite according to one of the preceding claims, wherein the ion-conducting material is from the group of sulphonated aromatic polyether ether ketones, NafionÒ, other anionic polyaryl ethers and/or other sulphonated perfluorinated polymers.

19. Tubular composite according to one of the preceding claims, wherein the ion-conducting material comprises an oxide, in particular a solid oxide.

20. Module (50) composed of a preferably cylindrical frame (52) and a plurality of tubular composites (1) according to one of Claims 1 to 19 arranged in the frame (52) parallel and longitudinally to the longitudinal axis of the frame (52).

21. Module according to Claim 20, wherein the mesh stands in electrically conductive contact with an electron-conducting device.

22. Module according to Claim 21, wherein the mesh (11, 17) facing the surface of the tubular composite (1) stands in electrically conductive contact with an external connection (31).

23. Module according to one of Claims 20 to 22, wherein the mesh (3) facing the central cavity (19) of the tubular composite (1) stands in electrically conductive contact with one or more metal wires (21).

24. Module according to one of Claims 20 to 23, wherein tubular composites (81), which are electrically connected in parallel, are contained in the frame (52).

25. Module according to one of Claims 20 to 24, wherein the tubular composites (1) are arranged in a matrix (54) in the frame (52) and the individual frames are electrically connected in series.

26. Reactor containing at least one module according to one of Claims 20 to 25 and a housing.

27. Reactor according to Claim 26, wherein this contains at least two modules, which are electrically connected in series or in parallel to one another.

28. Process for the continuous production of a tubular composite, in particular according to one of the preceding claims, wherein bundles and/or wires or fibres of an electron-conducting material are braided to form a tube of this electron-conducting material, and an ion-conducting material is then applied to the outside of the mesh remote from the central cavity of the tube and if necessary dried.

29. Process according to Claim 28 for the production of a tubular composite configured as a fuel cell element, wherein both after the braiding of the tube and after application of the i on-conducting material at least one catalyst layer is respectively applied and if necessary dried, and also a further mesh composed of bundles and/or wires or fibres of an electron-conducting material is then applied to the outwardly oriented catalyst layer, preferably by braiding carbon fibre bundles and/or metal wires.

30. Process according to Claim 28 or 30 for the production of a tubular composite configured as ion exchanger membrane, wherein bundles and/or wires or fibres of an electron-conducting material are braided to form a tube made of a mesh of this electron-conducting material, then a mesh of electrically insulating or ion-conducting fibres is applied as spacer, an intermediate layer of an easily washed out material is a pplied and a layer of an ion-conducting material is applied thereto.

31. Process according to one of Claims 28 to 30, wherein the intermediate layer of an easily washed out material is a PVA (polyvinyl alcohol) layer.

32. Process according to one of Claims 28 to 31, wherein a further mesh made of electrically insulating or ion-conducting fibres is applied as spacer to the layer of ion-conducting material and then a further layer of an electron-conducting material is applied.

33. Process according to one of Claims 28 to 32, wherein the intermediate layer of an easily washed out material is washed out after production of the tubular composite or after joining the individual hollow fibres together to form a module.

## Revendications

1. Composé tubulaire (1) formé d'un tressage (3) de faisceaux et/ou de fils ou de fibres d'une matière conductrice d'électrons et d'une couche (5) d'une matière conductrice d'ions placée sur celle-ci,
le composé tubulaire étant obtenu par tressage des faisceaux et/ou des fils ou des fibres pour former un tube en un tressage de cette matière conductrice d'électrons, et ensuite par application de la matière conductrice d'ions sur le côté extérieur du tressage, à l'opposé du lumen du tuyau et le cas échéant par séchage.

2. Composé tubulaire selon la revendication 1,
**caractérisé en ce que**
le lumen (19) comporte un ou plusieurs fils métalliques (21) alignés parallèlement à la direction longitudinale du composé.

3. Composé tubulaire selon la revendication 2,
**caractérisé en ce qu'**
il comporte plus d'un fil métallique (21) sous la forme d'un cordon.

4. Composé tubulaire selon l'une des revendications 1 à 3,
**caractérisé en ce que**
le composé tubulaire (1) est réalisé comme élément de pile à combustible et à la fois entre le tressage (3) de faisceaux et/ou de fils ou de fibres d'une matière conductrice d'électrons et la couche (5) d'une matière conductrice d'ions ainsi que sur la couche (5) de la matière conductrice d'ions on a chaque fois au moins une couche de catalyseur (7, 9), et
la couche de catalyseur (9) orientée vers l'extérieur est couverte par un autre tressage (11) de faisceaux et/ou de fils ou de fibres d'une matière conductrice d'électrons.

5. Composé tubulaire selon l'une des revendications précédentes,
**caractérisé en ce que**
chaque fois une couche de catalyseur (7, 9) contient un ou plusieurs éléments du sous-groupe VIII de la classification périodique, le cas échéant avec du charbon, du noir de fumées ou du graphite.

6. Composé tubulaire selon l'une des revendications précédentes,
**caractérisé en ce qu'**
au moins une couche de catalyseur (7, 9) contient des additifs hydrophobes et/ou de matières conductrices de protons.

7. Composé tubulaire selon l'une des revendications 1 à 3,
**caractérisé en ce qu'**
il est réalisé comme membrane échangeuse d'ions.

8. Composé tubulaire selon la revendication 7,
**caractérisé en ce qu'**
entre le tressage (3) formé de faisceaux et/ou de fils ou fibres d'une matière conductrice d'électrons et la couche (5) d'une matière conductrice d'ions, on a un organe d'espacement (13) conducteur d'ions ou neutre.

9. Composé tubulaire selon la revendication 8,
**caractérisé en ce qu'**
au-dessus de la couche (5) d'une matière conductrice d'ions on a un autre organe d'écartement (15) couvert par un autre tressage (17) formé de faisceaux et/ou de fils ou de fibres d'une matière conductrice d'électrons.

10. Composé tubulaire selon les revendications 8 ou 9,
**caractérisé en ce que**
l'organe d'écartement (13, 15) est un tressage de fibres isolantes électriques ou conductrices d'ions.

11. Composé tubulaire selon l'une des revendications précédentes,
**caractérisé en ce que**
la matière conductrice d'électrons est un tissu de support conducteur d'électrons, notamment une électrode.

12. Composé tubulaire selon l'une des revendications précédentes,
**caractérisé en ce que**
les faisceaux sont formés de fibres de carbone, notamment d'un diamètre de faisceau de 0,1 à 2 mm et de préférence 0,2 à 2 mm.

13. Composé tubulaire selon l'une des revendications précédentes,
**caractérisé en ce que**
les fils sont en métal ou sont principalement formés de métal.

14. Composé tubulaire selon l'une des revendications précédentes,
**caractérisé en ce que**
le métal est un métal résistant à la corrosion ou un alliage résistant à la corrosion.

15. Composé tubulaire selon l'une des revendications précédentes,
**caractérisé en ce que**
les fibres de carbone et/ou les fils ont un diamètre compris entre 10 et 300 µm.

16. Composé tubulaire selon l'une des revendications précédentes,
**caractérisé en ce qu'**
il est un tube d'un diamètre intérieur de 0,2 à 3 mm.

17. Composé tubulaire selon l'une des revendications précédentes,
**caractérisé en ce que**
la matière conductrice d'ions est une membrane.

18. Composé tubulaire selon l'une des revendications précédentes,
**caractérisé en ce que**
la matière conductrice d'ions est formée du groupe des polyétheréthercétones aromatiques sulfonés, Nafion®, d'autres polyaryléthers anioniques et/ou d'autres polymères sulfonés, perfluorés.

19. Composé tubulaire selon l'une des revendications précédentes,
**caractérisé en ce que**
la matière conductrice d'ions comprend un oxyde, notamment un oxyde solide.

20. Module (50) formé d'un châssis (52), de préférence cylindrique et de nombreux composés tubulaires (1) disposés parallèlement au cadre (52), suivant son axe longitudinal, ces composés correspondant aux revendications 1 à 19.

21. Module selon la revendication 20,
**caractérisé en ce que**
le tressage est en contact électroconducteur avec un dispositif conducteur d'électrons.

22. Module selon la revendication 21,
**caractérisé en ce que**
la surface du tressage (11, 17) tournée vers le composé tubulaire (1) est en contact électrique avec un branchement extérieur (31).

23. Module selon l'une des revendications 20 à 22,
**caractérisé en ce que**
le tressage (3) tourné vers le lumen (19) du composé tubulaire (1) est en contact électroconducteur avec un ou plusieurs fils métalliques (21).

24. Module selon l'une des revendications 20 à 23,
**caractérisé par**
des composés tubulaires (1) dans le cadre (52), ces composés étant branchés électriquement en parallèle.

25. Module selon l'une des revendications 20 à 24,
**caractérisé en ce que**
les composés tubulaires (1) sont disposés dans le cadre (52) suivant une matrice (54) et les différents cadres sont branchés électriquement en série.

26. Réacteur comportant au moins un module selon l'une des revendications 20 à 25 et un boîtier.

27. Réacteur selon la revendication 26,
**caractérisé en ce qu'**
il comporte au moins deux modules reliés électriquement en série ou en parallèle.

28. Procédé de fabrication en continu d'un composé tubulaire, notamment selon l'une des revendications précédentes,
les faisceaux et/ou les fils ou fibres d'une matière conductrice d'électrons étant tressés pour former un tube tressé avec cette matière conductrice d'électrons, et en appliquant ensuite sur le côté extérieur du tressage, à l'opposé de celui tourné vers le lumen du tube, une matière conductrice d'ions et le cas échéant on fait sécher.

29. Procédé selon la revendication 28 pour la fabrication d'un composé tubulaire réalisé comme élément de pile à combustible, selon lequel
et à la fois après le tressage du tube et après l'application de la matière conductrice d'ions, on applique chaque fois au moins une couche de catalyseur et le cas échéant on sèche et ensuite, sur la couche de catalyseur orientée vers l'extérieur, on applique un autre tressage formé de faisceaux et/ou de fils ou fibres d'une matière conductrice d'électrons, de préférence par tressage de faisceaux de fibres de carbone et/ou de fils métalliques.

30. Procédé selon la revendication 28 ou 29 pour la fabrication d'un composé tubulaire réalisé comme membrane échangeuse d'ions, selon lequel
les faisceaux et/ou fils ou fibres d'une matière conductrice d'électrons étant tressés pour former un tube d'un tressage de cette matière conductrice d'électrons, ensuite on applique un tressage de fibres isolantes électriques ou conductrices d'ions comme organe d'espacement, on applique une couche intermédiaire d'une matière s'éliminant facilement par rinçage et sur cette couche on applique une couche d'une matière conductrice d'ions.

31. Procédé selon l'une des revendications 28 à 30,
**caractérisé en ce que**
la couche intermédiaire d'une matière qui s'élimine facilement par rinçage est une couche d'alcool polyvinylique (PVA).

32. Procédé selon l'une des revendications 28 à 31,
**caractérisé en ce que**
sur la couche de matière conductrice d'ions on applique un autre tressage de fibres isolantes électriques ou conductrices d'ions comme organe d'écartement et ensuite on applique une autre couche d'une matière conductrice d'électrons.

33. Procédé selon l'une des revendications 28 à 32,
**caractérisé en ce que**
la couche intermédiaire, formée d'une matière s'éliminant facilement par rinçage, est éliminée après fabrication du composé tubulaire ou après assemblage des différentes fibres creuses pour former un module.
